# EUROPEAN PATENT SPECIFICATION

(11) **EP 3 380 219 B1**
(45) Date of publication and mention of the grant of the patent: **29.09.2021**
(21) Application number: 16868960.2
(22) Date of filing: 18.11.2016
(51) Int. Cl.: B01F 3/04, B01F 13/00, B01F 15/00, C12H 1/14, C12H 1/22, C12L 11/00

(54) **METHOD AND APPARATUS FOR RELEASING GAS**
VERFAHREN UND VORRICHTUNG ZUR GASERZEUGUNG
PROCÉDÉ ET APPAREIL DE LIBÉRATION DE GAZ

(30) Priority: 23.11.2015 NZ 15714409
(43) Date of publication of application: 03.10.2018
(73) Proprietor: The New Zealand Institute for Plant and Food Research Limited, Mt Albert, Auckland 1025 (NZ)
(72) Inventor: ELMSLIE, Hamish John Alexander, Herne Bay, Auckland 1011 (NZ); KING, Benjamin Martin, Patons Rock, Takaka 7182 (NZ)
(74) Representative: Millburn, Julie Elizabeth
(86) International application number: PCT/NZ2016/050184
(87) International publication number: WO 2017/091088

(56) References cited:
- EP-A1- 1 116 695
- WO-A1-01/25159
- WO-A1-88/07977
- WO-A1-03/022983
- NZ-A- 598 313
- US-A- 3 664 647
- US-A- 5 089 179
- US-A- 5 762 418
- US-A- 5 996 977
- US-A1- 2003 066 429
- US-A1- 2005 098 497
- US-A1- 2011 070 331
- US-A1- 2011 215 042
- US-A1- 2011 268 856
- US-B1- 9 126 850

## Description

### FIELD

This disclosure relates to an apparatus and method for release of gas into a liquid.

### BACKGROUND

To improve the colour, taste and mouth-feel of wine, the wine is typically matured for a period of time. That maturation process has traditionally taken place inside oak barrels. The oak naturally lets in small amounts of oxygen that develop the tannins in the wine to result in a more palatable product. As the scale of wine production increases, winemakers are producing wine in large steel tanks to allow for larger production volumes. However, steel isn't permeable to oxygen, which inhibits the maturation of the wine. Instead, winemakers use dedicated micro-oxygenation systems to mimic the oxygen permeated in barrels. Not only does the micro-oxygenation process improve colour taste and mouth-feel, it can speed up the maturation process allowing wines to be brought to market in a shorter time frame compared to untreated wines and barrel aged wines. A major drawback with known micro-oxygenation systems is that the initial cost and complexity of the systems are prohibitive for many winemakers.

Known micro-oxygenation systems typically operate through a bubble plume diffusion method. That method involves releasing small bubbles of oxygen near the bottom of a tank through a diffuser. The oxygen is absorbed by the wine as it travels upwards. The efficacy of such a method is determined by the size of the bubbles and the depth of the tank.

US 3,664,647 discloses apparatus for introducing fine air bubbles into sewage and waste water of a sewage treatment plant to effect biological purification with air treatment. The apparatus comprises an aerating body A that normally has negative buoyancy in the water and is adapted to trap and be rendered buoyant by injected air which escapes into the water when the aerating body rises in the water. The aerating body rises and falls in the water periodically so that it agitates as well as aerates the water. The aerating body comprises a rectangular frame 2 with a central cross-brace made up of sections of plastic pipe 4-10. Secured to and extending transversely through about the midpoint of pipe section 10 is a short hollow tube 16. Overlying the frame is a diaphragm 20 in the form of a sheet of flexible water-resistant material. The diaphragm also is provided with a series of small air discharge openings 24. A flexible air hose 42 is connected to the air inlet tube 16 by suitable connecting means. The other end of the air hose 42 is attached to an air supply.

It is an object of at least preferred embodiments of the present invention to provide an apparatus and method for release of gas into a liquid to improve the qualities of the liquid. It is an additional or alternative object of at least preferred embodiments of the present invention to at least provide the public with a useful alternative.

### SUMMARY OF THE INVENTION

In accordance with a first aspect of the invention, there is provided an apparatus for releasing a gas into a liquid housed in a container, the apparatus comprising:
a. a gas assembly including a source of compressed gas;
b. a float in fluid communication with the source of compressed gas; and
c. a gas release membrane in fluid communication with the source of compressed gas and the float, the gas release membrane being adapted to release gas into the liquid, the gas release membrane extending or partially extending between the gas assembly and the float;
wherein the float has variable buoyancy that causes the float and the gas release membrane to ascend and descend depending on the buoyancy of the float, the buoyancy of the float being reduced as the gas is released into the liquid.

In an embodiment, the source of compressed gas is adapted to be provided outside the container, and the float and at least part of the gas release membrane are adapted to be housed within the container. In an alternative embodiment, the source of compressed gas, the float, and the gas release membrane are a self-contained assembly that is adapted to be housed within the container.

In an embodiment, the membrane comprises a flexible tube.

In an embodiment, the float is shaped to create a hydrodynamic effect that causes the float to move generally laterally as it ascends and/or descends.

In an embodiment, the float has one or more laterally extending fins.

In an embodiment, the apparatus further comprises a valve for controlling the flow of gas from the source of gas to the float and the gas release membrane.

In an embodiment, the gas is or comprises one or more of oxygen, sulphur dioxide, carbon dioxide, and/or nitrogen, either alone or in combination.

In an embodiment, the gas is or comprises oxygen.

In an embodiment, the gas is infused with one or more flavours or aromas.

In accordance with a second aspect of the invention, there is provided a method of releasing a gas into a liquid comprising:
a. providing a container containing a liquid;
b. providing a source of gas, a float in fluid communication with the source of gas, and a gas release membrane in fluid communication with the source of gas and the float, the gas release membrane extending or partially extending between the source of gas and the float;
c. placing the float and the gas release membrane in the liquid in the container;
d. delivering gas into the gas release membrane and the float thereby increasing the buoyancy of the float, releasing the gas from the source of gas through the gas release membrane into the liquid thereby reducing the buoyancy of the float; and
e. allowing the float to ascend and descend within the liquid in the container depending on the relative buoyancy of the float.

In an embodiment, the method further comprises controlling the flow of gas from the source of gas to the float and the gas release membrane such that when the pressure within the float reaches an upper threshold, the flow of gas from the source of gas is reduced or prevented and when the pressure within the float drops to a lower threshold, the gas is allowed to flow from the source of gas to the float and the gas release membrane.

In an embodiment, the flow of gas from the source of gas to the float and the gas release membrane is controlled periodically in a cycle in which gas is released for a first period of time and is not released for a second period of time.

In an embodiment, the cycle is between about 20 minutes and about 24 hours.

In an embodiment, the float moves laterally within the liquid in the container as it ascends and descends.

In an embodiment, the gas is or comprises one or more of oxygen, sulphur dioxide, carbon dioxide, and/or nitrogen.

In an embodiment, the gas is or comprises oxygen.

In an embodiment, the liquid is a beverage.

In an embodiment, the beverage is wine.

The term 'comprising' as used in this specification and claims means 'consisting at least in part of'. When interpreting statements in this specification and claims which include the term 'comprising', other features besides the features prefaced by this term in each statement can also be present. Related terms such as 'comprise' and 'comprised' are to be interpreted in a similar manner.

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7) and, therefore, all sub-ranges of all ranges expressly disclosed herein are hereby expressly disclosed. These are only examples of what is specifically intended and all possible combinations of numerical values between the lowest value and the highest value enumerated are to be considered to be expressly stated in this application in a similar manner.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting. Where specific integers are mentioned herein which have known equivalents in the art to which this invention relates, such known equivalents are deemed to be incorporated herein as if individually set forth.

As used herein the term '(s)' following a noun means the plural and/or singular form of that noun.

As used herein the term 'and/or' means 'and' or 'or', or where the context allows both.

The invention consists in the foregoing and also envisages constructions of which the following gives examples only.

### BRIEF DESCRIPTION OF THE DRAWINGS

The present invention will now be described by way of example only and with reference to the accompanying drawings in which:
Figure 1 is an exploded perspective view of a compressed gas source, regulator, valve, and housing for those components;
Figure 2 is a perspective view of the housing containing the compressed gas source, regulator, and valve;
Figure 3 is a perspective view of the compressed gas source, regulator, and valve assembled together;
Figure 4 is an exploded perspective view of a float;
Figure 5 is a perspective view of the apparatus with the float in a relatively non-buoyant position;
Figure 6 is a perspective view of the apparatus with the float in a relatively buoyant position;
Figure 7 is a front view of an alternative embodiment float;
Figure 8 is a perspective view of the float of Figure 7;
Figure 9 is a side view of the float of Figure 7;
Figure 10 is a perspective cross-section of an alternative embodiment float in a relatively negative buoyancy configuration;
Figure 11 is a view similar to figure 10 showing the float in a relatively positive buoyancy configuration;
Figure 12 is a schematic perspective view of a tank having the apparatus of Figure 5 in a relatively positively buoyant position;
Figure 13 is a schematic perspective view of a tank having the apparatus of Figure 5 in a relatively negatively buoyant position;
Figure 14 is a schematic perspective view of a tank with the membrane and float in the container and the other components will be provided outside the tank;
Figure 15 shows a control system for monitoring and/or controlling the apparatus;
Figure 16 shows a graph of membrane pressure over time;
Figure 17 shows a graph of membrane pressure over time;
Figure 18 shows an aggregate attribute ranking comparing Pinot Noir treated by an embodiment of the apparatus, an existing micro oxygenation system and a control;
Figure 19 shows an aggregate attribute ranking comparing Merlot treated by an embodiment of the apparatus, an existing micro oxygenation system and a control;

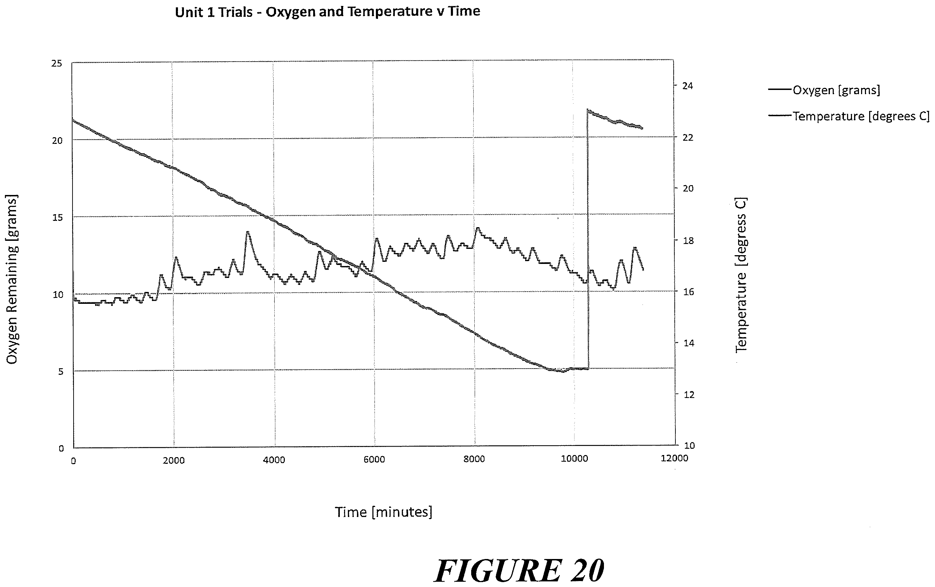

Figure 20 shows a graph of the release of oxygen during the trial; and

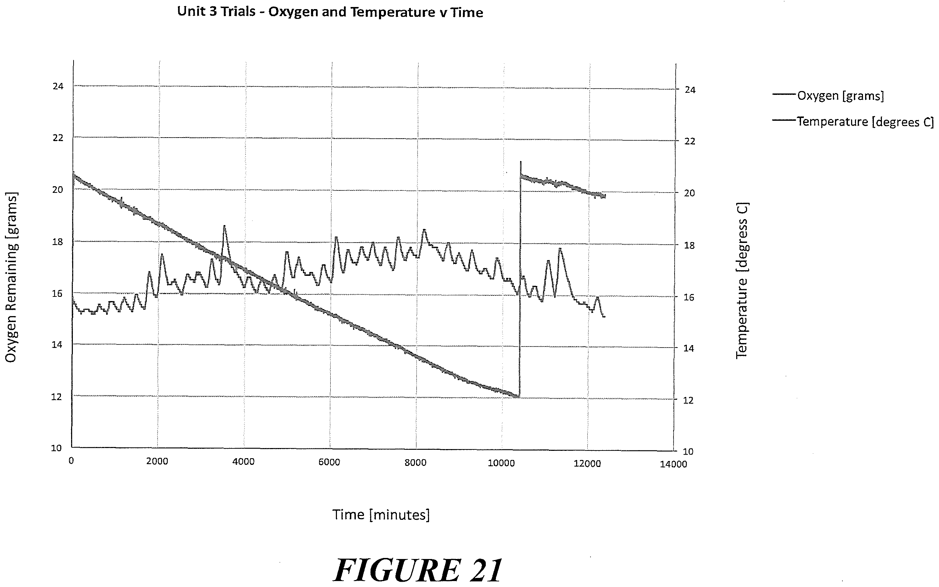

Figure 21 shows a graph of the release of oxygen collected during the trial.

### DETAILED DESCRIPTION

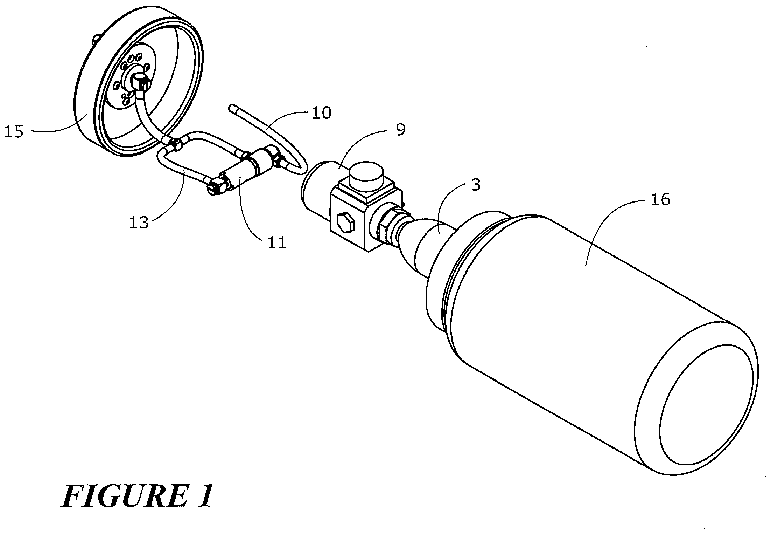

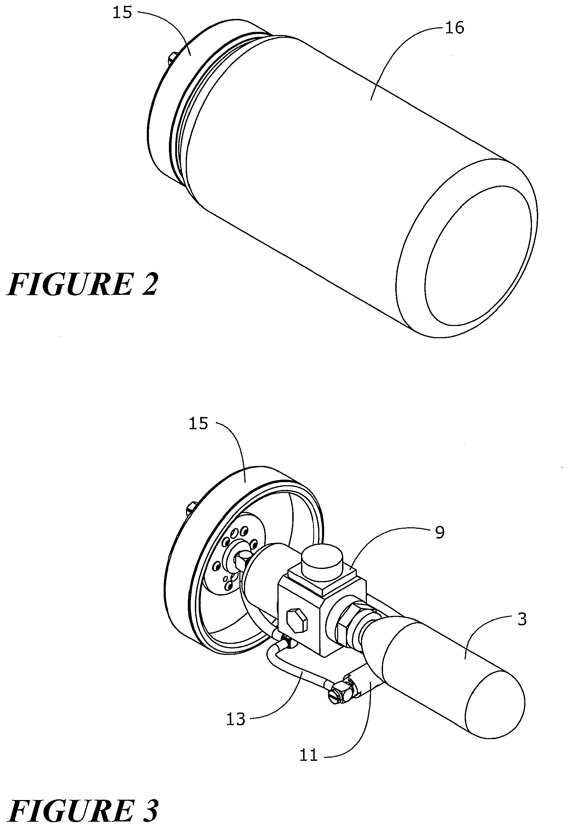

With reference to figures 1 to 6, 12 and 13, a preferred embodiment apparatus for releasing a gas into a liquid housed in a container 100 is shown. The apparatus is indicated generally by reference number 1. The container 100 may be a vat, barrel, tank, reservoir or any other container that is used to store, age, and/or transport liquid. The container may be a steel tank or a traditional wooden barrel, for example, if the barrel pores are clogged after being used a number of times.

The apparatus 1 comprises a source of compressed gas in the form of a gas cartridge 3, a float 5, and a gas release member in the form of a membrane 7. The gas cartridge is associated with a pressure regulator 9 and a pilot valve 11. Together with a pressure feedback tube 13, the valve 11 controls the flow of gas from the cartridge via a tube 10 to the membrane 7. The pressure at which the valve 11 opens and closes is matched with the diffusion rate of the membrane. The pressure regulator 9, tube 10, pilot valve 11, and feedback tube 13 are housed in a housing 16 having a lid 15. The pressure regulator may be adjustable. The features and function of the float 5 are similar to a syringe. The plunger may have a membrane seal that will have little or no sliding friction.

The float 5 is in fluid communication with the gas cartridge 3 so that gas can be delivered from the gas cartridge 3 to the float 5. The membrane 7 is in fluid communication with the gas cartridge 3 and the float 5. In particular, the membrane 7 delivers gas from the gas cartridge 3 to the float 5. The membrane 7 is also adapted to release gas into the liquid L.

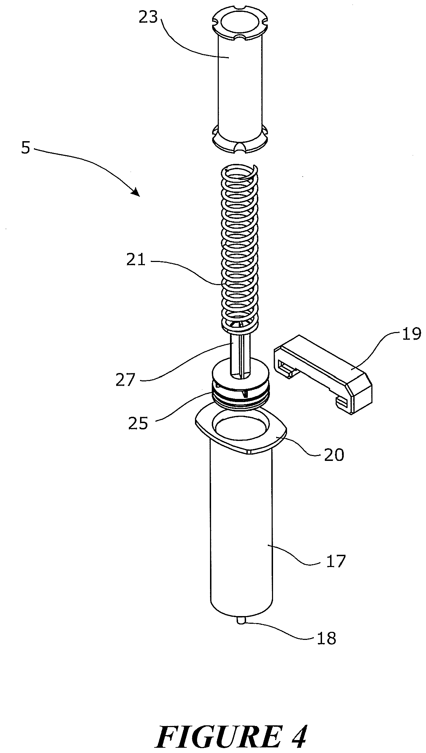

With reference to figures 4 to 6, a first embodiment of the float is shown. The float 5 has variable buoyancy that causes the float 5 to ascend and descend in the liquid L depending on the buoyancy of the float 5. The float 5 has a housing 17 and a gas port 18 in fluid communication with the membrane 7.

The housing 17 also includes end cap 19 connected to a flange 20 of the housing. Within the housing 17, there is provided a spring 21, a spacer 23, and a plunger 25 having a shaft 27. The spacer 23 sets the spring tension and can be removed and replaced with a shorter or longer spacer to adjust the spring tension. The spring tension is matched with the diffusion rate of the membrane 7. The spacer 23 and spring 21 are held in the housing 17 by the end cap 19. The gas port 18 is coupled to the membrane 7 so gas can flow between the interior of the membrane 7 and the interior of the housing 17 between the port 18 and the plunger 25.

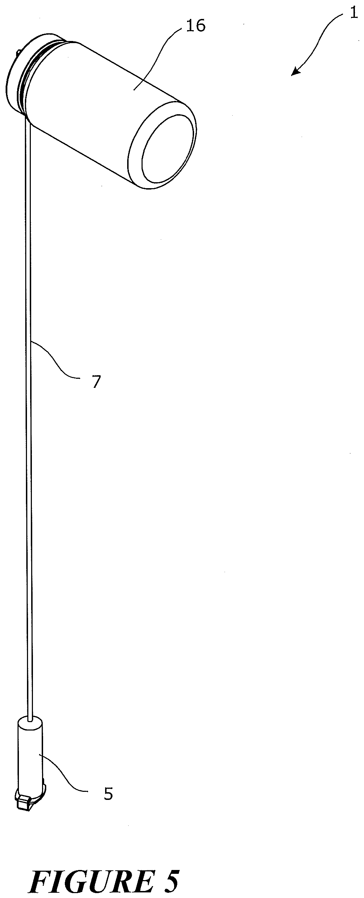

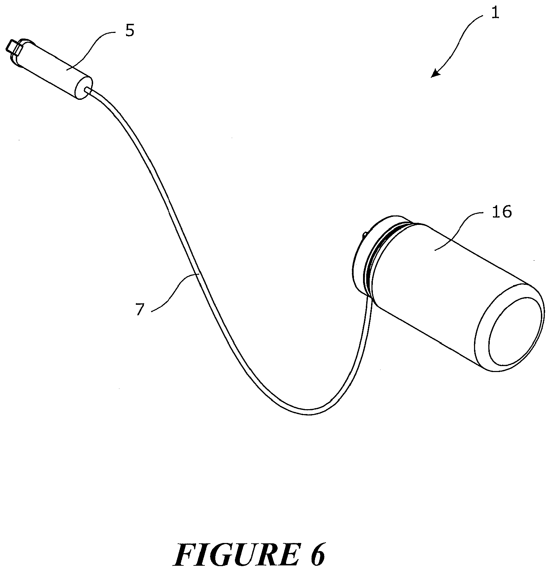

When gas is initially released into the membrane 7 and float 5, the gas pressure will be relatively high and will act against the plunger 25 and the spring 21 causing the plunger to move towards the end cap 19. That causes the float 5 to have a relatively positive buoyancy and float in the liquid L, as shown in figure 6. Over time, the gas will be released through the membrane 7 and the pressure in the float 5 will drop. The spring 21 will cause the plunger 25 to move away from the end cap 19. The float will have a relatively negative buoyancy and drop, as shown in figure 5.

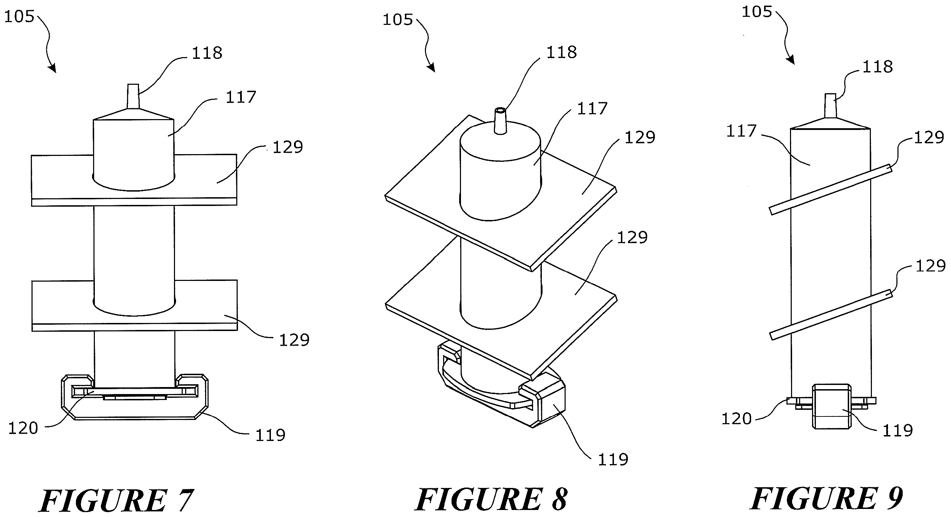

With reference to figures 7 to 9, there is shown an alternative embodiment float 105. The alternative embodiment float 105 has similar features and functions to the float shown and described in relation to figures 4 to 6 and like numbers are used to indicate like parts. The difference is that the float 105 is shaped to create a hydrodynamic effect that causes the float 105 to move laterally as it ascends and/or descends in the liquid L.

In the embodiment shown, the float 105 has one or more laterally extending fins 129. In the preferred embodiment shown, the float has two fins 129. The fins 129 are substantially rectangular when viewed from above, but may have other shapes, such as hexagonal, circular, or triangular. The fins 129 extend at an angle relative to the length of the float housing. That angle has a hydrodynamic effect that causes the float to move laterally as it ascends or descends in the liquid L.

In addition, any embodiment described above may also provide lateral movement by creating a fluid jet into the float design so that when the float fills with gas, fluid is rapidly displaced and creates a hydrodynamic force. Additionally or alternatively, lateral movement may be provided by a shaped membrane, that is, the membrane may have a curved shaped.

In this embodiment, the end cap 119 is also a weight that maintains the vertical orientation of the float 105 as it moves about the container 100. The weight 119 is attached to a flange 120 of the float housing 117.

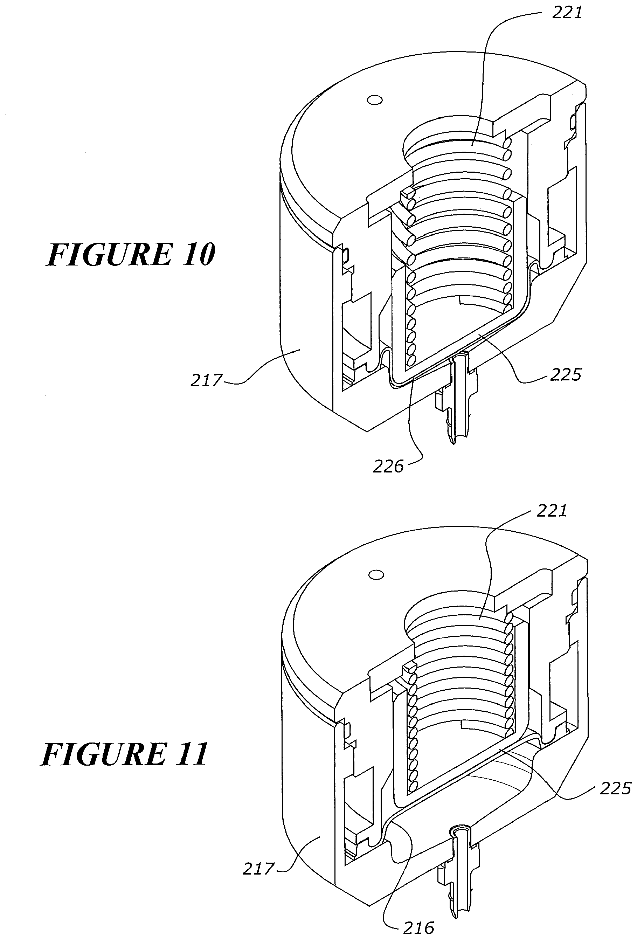

With reference to figures 10 and 11, there is shown a third embodiment of a float 205. The third embodiment float 205 has similar features and functions to the first embodiment float shown and described in relation to figures 4 to 6 and like numbers are used to indicate like parts. This float has a housing 217, a piston 225, and a seal 216. One difference is that the seal 216 is a rolling seal that changes shape as required when the piston moves, rather than sliding along the housing when the piston moves. As a consequence, there is very little or no friction caused by the piston movement.

The rolling seal 216 is attached to the housing 217 and attached to the piston 225. As the piston 225 moves from the position shown in figure 10, the rolling seal 216 unfolds until it reaches the position shown in figure 11.

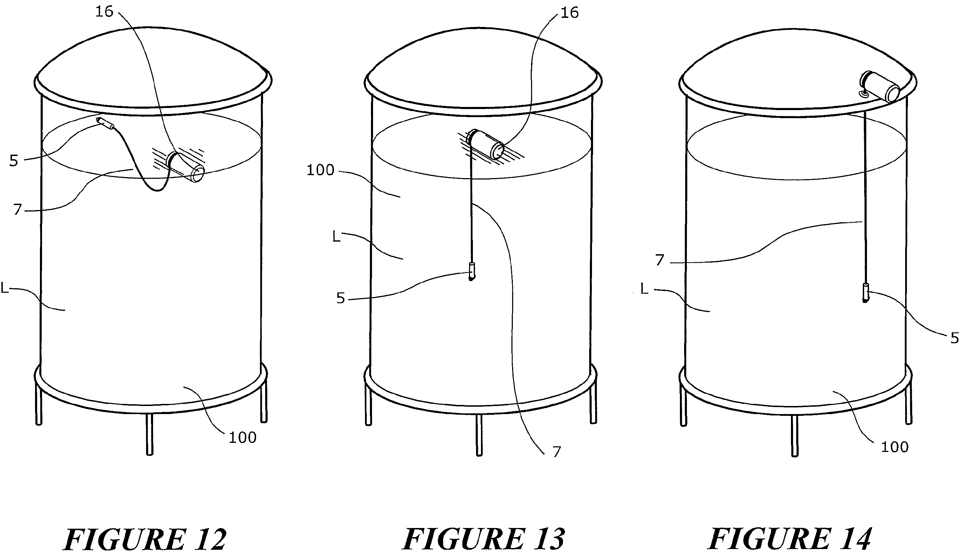

The membrane 7 is caused to travel through the liquid L as the float 5 travels through the liquid. The membrane 7 is suitably flexible to both move and change shape as the float 5/105 travels through the liquid L. For example, figures 5 and 13 shows the membrane 7 dropping straight down from the housing 16 because the float 5 is negatively buoyant. Figures 6 and 12 show the membrane 7 having a curved shape because the float 5 is positively buoyant and spaced away from the housing 16.

In the embodiment shown, the membrane 7 extends between the housing 16 and the float 5. In an alternative embodiment, the membrane 7 may partially extend between the housing 16 and the float 5. In this alternative embodiment, the apparatus 1 may have a low permeability or very low permeability tube extending from the housing 16 to the membrane 7. Additionally or alternatively, the apparatus may have a non-permeable tube extending from the float to the membrane 7.

The membrane 7 comprises a silicone tube that releases gas into the liquid. In alternative embodiments, the membrane may be formed from other gas permeable materials. The gas may diffuse into the liquid either as bubbles or dissolve directly into the liquid. Two examples of example of suitable, commercially available membranes are:
Tygon 3350 produced by Saint-Gobain
   Material: Platinum-cured silicone tubing
   Length: 2 meters
   Membrane inside diameter: 3mm
   Membrane outside diameter: 6mm
   Membrane wall thickness: 1.5mm
Versilic SPX-50 produced by Saint-Gobain
   Material: silicone tubing
   Length: 2 meters
   Membrane inside diameter: 3mm
   Membrane outside diameter: 6mm
   Membrane wall thickness: 1.5mm

Typically membranes may range from anywhere between (but not limited to) 0.5m to 5m in length. It will be appreciated that the length may be chosen or determined by the oxygen release rate required for the particular wine and/or the size of the wine container and amount of wine contained therein. Examples of oxygen release rates for specific wine varieties are:
Merlot = 1-5mg/L/month.
Pinot Noir = 1-2mg/L/month.
Chardonnay = 1-2mg/L/month.

For example, the membrane 7 length may be about 0.6m, 0.7m, 0.8m, 0.9m, 1.0m, 1.1m 1.2m, 1.3m, 1.4m, 1.5m, 1.6m, 1.7m, 1.8m, 1.9m, 2.0m, 2.1m 2.2m, 2.3m, 2.4m, 2.5m, 2.6m, 2.7m, 2.8m, 2.9m, 3.0m, 3.1m 3.2m, 3.3m, 3.4m, 3.5m, 3.6m, 3.7m, 3.8m, 3.9m, 4.0m, 4.1m, 4.2m, 4.3m, 4.4m, 4.5m, 4.6m, 4.7m, 4.8m, 4.9m, or 5.0m.

The membrane length is one of a number of parameters that can be adjusted to determine the oxygen release rate. Other parameters include pressure, membrane material, membrane wall thickness, membrane diameter, and the wine itself.

The gas is or comprises one or more of oxygen, sulphur dioxide, carbon dioxide, and/or nitrogen, either alone or in combination. In the preferred embodiment, the gas is or comprises oxygen. In some embodiments, the gas may be infused with one or more flavours or aromas, such as oak.

An advantage for including additional gas(es) alongside oxygen within the apparatus is that the additional gas will have a direct reaction within the wine to improve the flavours, colour, and/or texture or to remove undesirable characteristics.

In one embodiment, the gas cartridge 3, the float 5, and the membrane 7 are a self-contained assembly that is adapted to be housed entirely within the container 100. That is, there is no part of that assembly outside the container 100. That embodiment is shown in Figures 5 and 6. An advantage of this embodiment is that the apparatus can be used with a conventional wine tank or wine barrel without modifications or external equipment. The device requires little or no input from an operator once introduced into a container 100.

Figure 14 shows an alternative embodiment in which the float 5 and the membrane 7 may be provided in the container 100, but the other components will be provided outside the container. In particular, the gas cartridge 3, pressure regulator 9, and the valve 11 may be outside the container 100.

A tube could extend through an aperture, entrance port or bung of the container 100 and supply gas to the membrane 7 in the liquid L. In another alternative embodiment, the housing could be mounted to the exterior of the container 100 in place of the bung/lid.

Those components may be in a housing 16. An advantage of this embodiment is that it is relatively easy for an operator to access the gas cartridge 3 to check it is operating and replace the gas cartridge 3.

The various components of the apparatus that come into contact with the liquid are food grade materials. For example, the membrane is formed from a food grade silicon, the housing, float housing, and end cap are each formed from a food grade plastic material. The valve is formed from brass and stainless steel and the cartridge is formed from steel.

A method of releasing a gas into a liquid will now be described. The method comprises placing the float and the housing containing the gas cartridge and valve 11 in the liquid in the container 100.

In use, the gas is released into the membrane 7 from the gas cartridge 3 through the valve 11. The gas pressure acts against the plunger 27 in the float 5 causing the plunger to move upwardly and the float becomes buoyant and floats upwardly. The pressure in the membrane 7 and float 5 feeds back to the valve 11 causing it to close. The gas diffuses through the membrane 7 into the liquid. The pressure in the float 5 decreases to an intermediate pressure and the float 5 becomes negatively buoyant and sinks. The gas continues to diffuse into the liquid from the membrane 7. At a low pressure threshold, the valve 11 opens and the cycle begins again.

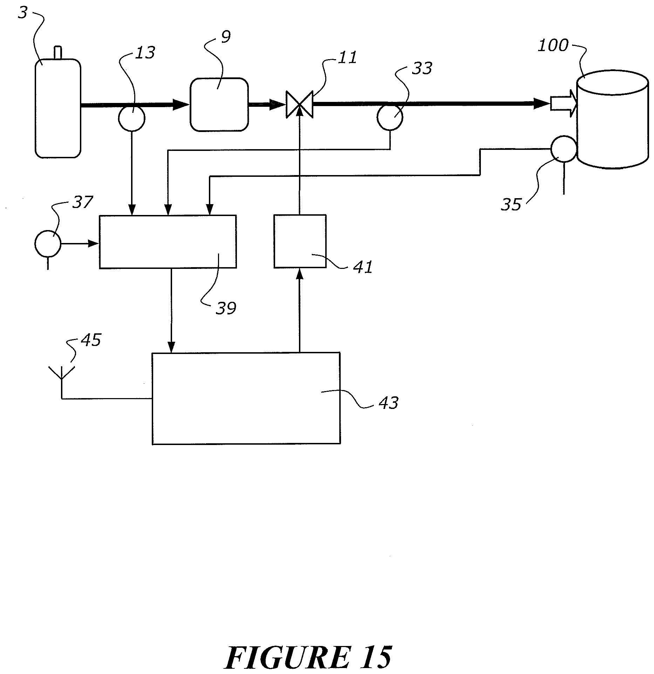

Figure 15 shows a control system for monitoring and/or controlling an alternative embodiment of the apparatus. The control system of this alternative embodiment operates to provide gas from the gas cartridge to the float and the membrane by operating a solenoid valve based on feedback from a plurality of sensors. It will be appreciated that figure 15 is one possible way to control the pressure. Other methods are also possible. Figure 15 shows a pressure sensor 13 between the oxygen tank 3 and a pressure regulator 9. Another pressure sensor 33 is located in the float, or may be located to measure pressure in the membrane. A temperature sensor 35 measures the temperature of the wine in the tank. An ambient temperature sensor 37 measures the ambient temperature. The system carries out signal conditioning at 39 based on data received from the ambient temperature sensor, the pressure sensors, and the temperature sensor of the tank. Data is then sent to a microcontroller, which will send a signal to a valve driver to operate the solenoid valve. When the pressure of the gas in the float reaches the low pressure threshold, the control system will operate the solenoid valve. The system may have one low pressure threshold and one high pressure threshold. Alternatively, the system may operate in bands of pressure thresholds.

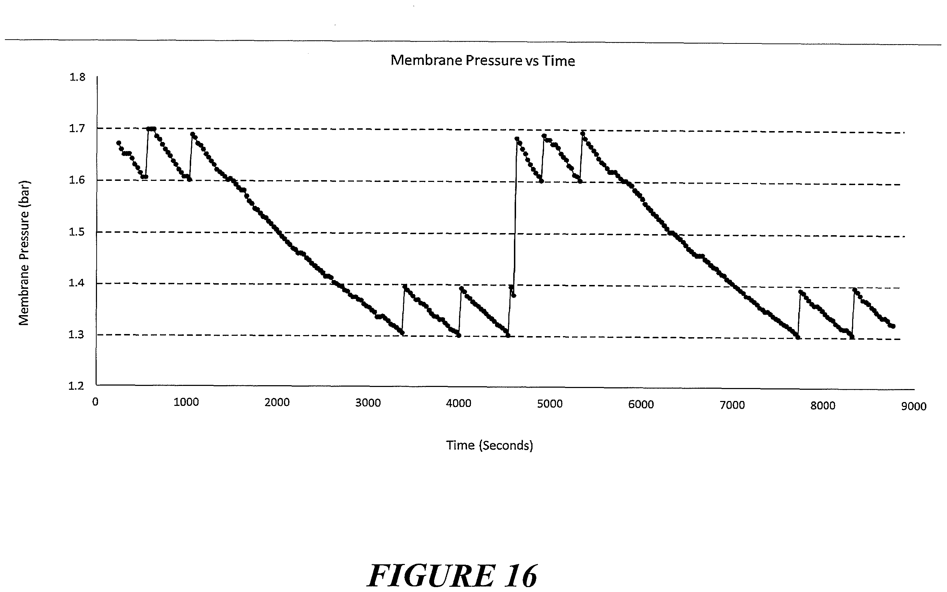

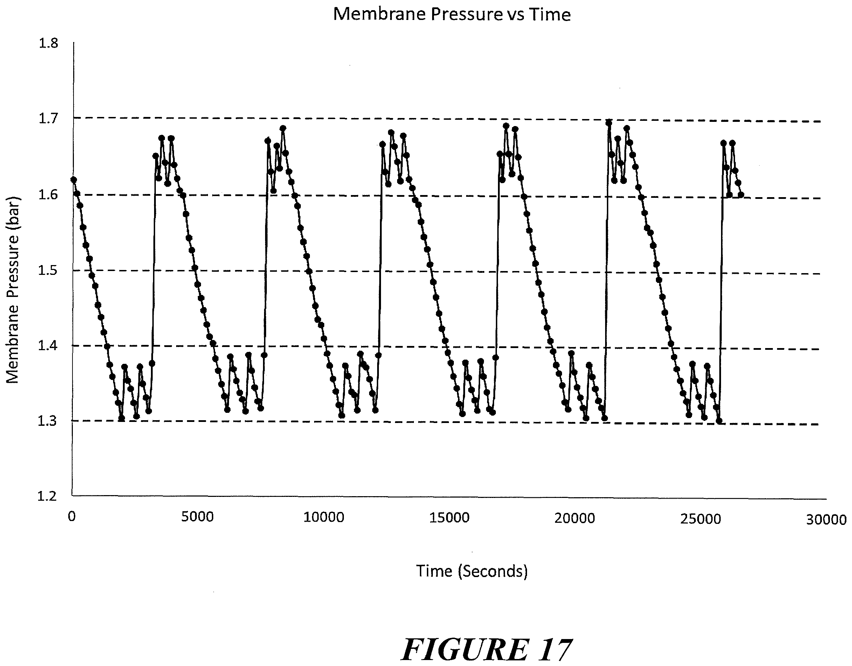

Figures 16 and 17 show graphs of the pressure in the float membrane over time in which the system operates in bands of pressure. Each graph shows that the membrane pressure alternates between two bands of pressure and within each band of pressure: one band has a relatively higher pressure and corresponds to the float being positioned relatively high in the tank of wine. Within the band of pressure, the graphs show that the pressure changes over time and alternates between about 1.6 bar and about 1.7 bar.

The other band has a relatively lower pressure and corresponds to the float being positioned relatively low in the tank of wine. For example, the float may be positioned at or near the middle of the tank, or at or near the bottom of the tank. Within the band of pressure, the graphs show that the pressure changes over time and alternates between about 1.3 bar and about 1.4 bar.

The float moves when the pressure transitions between the two bands by passing through a neutral buoyancy point, which, in the case of figure 16 & 17 is at 1.5 bar. Additionally, the position of the float when negatively buoyant (or in the lower pressure band) will be dictated by the length of the membrane. When the float is positively buoyant (or in the upper pressure band) the float will remain on the surface of the liquid.

The neutral buoyance pressure can be determined as follows:
1. Allow float pressure to drop to zero (or do this before any oxygen has been put into the membrane).
2. Slowly increase the pressure in the membrane at, say, 0.05 bar increments every 30 seconds.
3. Monitor the pressure in membrane continuously.
4. As the pressure reached the neutral buoyancy point and goes beyond it, a pressure change in the membrane can be detected that is reflective of the hydrostatic pressure change due to the float rising up in the liquid and thus having a decrease in hydrostatic pressure.

The housing 16 may float in the liquid L or move downwardly towards the bottom of the container 100. The housing may tilt, float, or move downwardly depending on the amount of oxygen remaining in the cartridge 3. In addition to the membrane 7 and float 5 moving, the housing 16 may also move.

Moving the membrane 7 allows for a better overall distribution of oxygen throughout the tank of liquid L. By moving the membrane 7 periodically, a greater proportion of the liquid comes into close proximity to the membrane 7 compared to a membrane that is stationary or relatively stationary. As a result, the active float provides a more effective micro-oxygenation treatment compared to a membrane that is stationary or relatively stationary.

By moving the active float through the liquid L, a build-up of oxygen around the outside of the membrane 7 is prevented, or at least substantially inhibited, or at least reduced compared to a relatively stationary membrane. The process of introducing the oxygen into the liquid through a membrane is driven by the concentration differential. If the liquid around the membrane 7 becomes too saturated with oxygen, the release rate of oxygen through the membrane 7 may slow, or even stop completely. Periodically moving the membrane 7 prevents, or at least substantially inhibits, oxygen saturation. When the apparatus has the float 105 shown and described in relation to figures 7 to 9, the float moves laterally within the liquid in the container as it ascends and descends.

In one embodiment, the flow of gas is controlled periodically in a cycle in which gas is released for a first period of time and is not released for a second period of time.

The method is preferably carried out for a number of cycles and those cycles repeat over a minimum of one month. The cycle may be between about 20 minutes and about 24 hours. The rate of oxygen release may be controlled to have different amounts of oxygen per litre over time. One example is:
5mg of oxygen per litre for the first month.
3mg of oxygen per litre for the second month.
1mg of oxygen per litre for the third month.

In some embodiments, the method may include applying 1mg of oxygen per litre of wine to 'open' the wine before delivery. It is also possible to apply oxygen using the apparatus and method described herein during transportation of the wine.

The operating parameters will be adjusted depending on the type of liquid that is being treated. The apparatus and method may be used for aging rum, beer, vinegar, sherry, whiskey, or brandy.

### Experimental results

Using the preferred embodiment apparatus and method described above has given the following initial results:
Merlot
   Membrane Type: Tygon 3350
   Membrane Length: 2m
   Membrane Average Pressure: 1.45 bar
   Average membrane cycle time: 55 minutes
   Oxygen release rate: 15.45 grams per month
   Volume of wine: 11,000 litres
Pinot Noir
   Membrane Type: Tygon 3350
   Membrane Length: 1m
   Membrane Average Pressure: 1.25 bar
   Average membrane cycle time: 55 minutes
   Oxygen release rate: 7.18 grams per month
   Volume of wine: 11,000 litres

Comparative tests were performed with wine treated using the preferred embodiment apparatus and the same wine that had no oxygen treatment. The treated wine exhibited flavour differences compared to the untreated wine, indicative of oxygenation and aging of the treated wine.

### Trial Background

A further detailed trial was conducted to test the suitability and performance of an embodiment of the apparatus for releasing a gas into a liquid. The trial was designed to assess and compare an embodiment of the apparatus against an existing micro oxygenation system and a control. The control was wine without any micro oxygenation system. The trial was carried out across six tanks and two wine varieties. Environmental factors were replicated as well as time spent in the act of winemaking. For example, all tanks were exposed to external oxygen for the same amount of time.

The wines were actively monitored throughout the trial with the resulting wine assessed by an independent laboratory at regular intervals throughout the trial.

### Tank setup

Six tanks were included in the trial, each tank had the following dimensions:
▪ Height: 2.5m
▪ Diameter: 2.35m
▪ Capacity: 11,000

### Tank Wine type Treatment Oxygen rate

Tank 1: Pinot Noir with an embodiment of apparatus for two months with a release rate of 1mg of oxygen per litre per month
Tank 2: Pinot Noir with the competitor's apparatus for two months with a release rate of 1mg of oxygen per litre per month
Tank 3: Pinot Noir Control for two months with a release rate of 0 mg of oxygen per litre per month
Tank 4: Merlot with an embodiment of apparatus for 1 month with a release rate of 2mg of oxygen per litre per month
   1 month with a release rate of 1mg of oxygen per litre per month
Tank 5: Merlot with the competitor's apparatus for 1 month with a release rate of 2mg
   1 month with a release rate of 1mg of oxygen per litre per month
Tank 6: Merlot Control for two months @ 0mg of oxygen per litre per month

### Winemaker objectives

Objectives and characteristics of each wine were determined prior to the commencement of the trials. The Pinot Noir needed "to build body and soften tannins to give more depth and fullness to the wine". The Merlot needed to 'refine and soften tannins to bring depth across palate and less dryness on the finish". These development objectives determined the oxygen flow rates required for each variety as described above in relation to the tank wine type treatment oxygen rate.

### Monitoring the trial: Blind tastings

To assess the progress against the development goals, winemakers conducted systematic blind tastings of each wine at fortnightly intervals. Each sample was assessed on its taste and development, noting its individual attributes and comparing those to the other blind samples within its variety.

### Independent laboratory analysis

Samples of each of the wines were taken and sent to an independent laboratory specialising in wine analysis where a Basic wine panel was conducted pre-trial and post-trial across each sample. This panel analysis consisted of measuring the pH, Titratable acidity (TA), Free and Total SO2, Alcohol, Acetic acid, Glucose/Fructose, Malic acid of the wine. Fortnightly testing and analysis was also conducted by the laboratory across the range of samples. In addition to this, the winemakers also conducted chemical analysis of the wines, assessing the changes in pH, Free and Total SO2, TA, volatile acidity as well as measuring the temperature, dissolved oxygen, hue, density and turbidity across the course of the trial.

### Real time remote monitoring

The apparatus may be used with real time monitoring of each unit. The monitoring allows monitoring of the performance, as well as remote adjustments to release rates of oxygen. This monitoring provided valuable feedback with respect to flow rate, pressure, float oscillations, oxygen levels and temperature. Real time monitoring was used during the trials and data was reported automatically every 5 minutes throughout the ten week trial providing a robust data set.

At the conclusion of the trials, a blind taste test was performed by a panel of winemakers to assess whether the different treatments were easily distinguishable from each other and to assess the individual attributes of each wine. The panel were provided with blind samples with the objective of establishing the taste profile across the 6 tanks, ranking how the preferred embodiment apparatus performed in relation to wine treated by the competitor and the control wine.

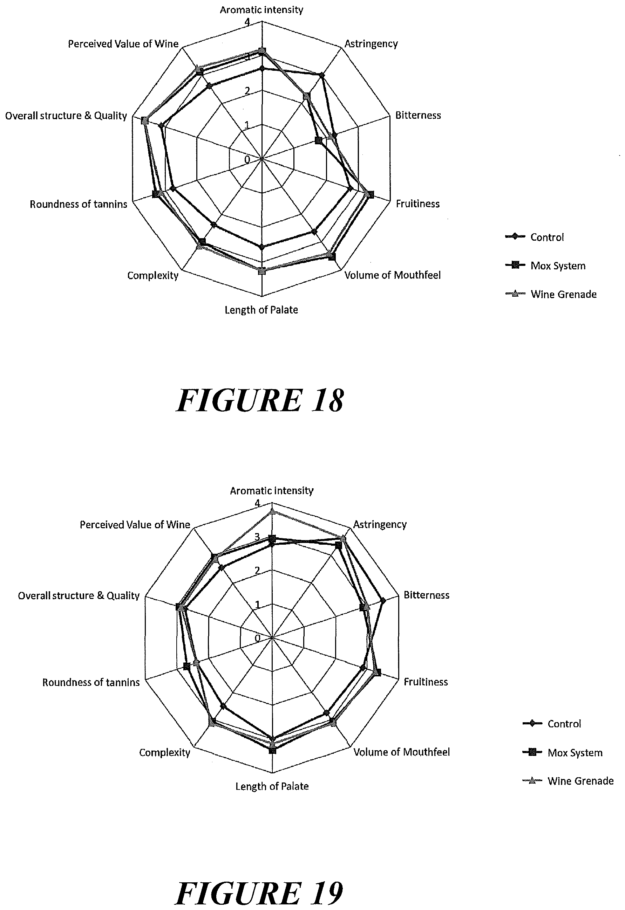

Figure 18 shows an aggregate attribute ranking comparing Pinot Noir treated by an embodiment of the apparatus (indicated by the triangle symbol), the existing micro oxygenation system (indicated by the square symbol) and the control (indicated by the circle symbol).

Figure 19 shows an aggregate attribute ranking comparing Merlot treated by an embodiment of the apparatus (indicated by the traingle symbol), the existing micro oxygenation system (indicated by the square symbol) and the control (indicated by the circle symbol).

As can be seen in figures 18 and 19, the aggregated tasting panel attribute ranking showed that wine treated by an embodiment of the apparatus ranked equally or above the wine treated by the existing micro oxygenation system and the control wine across each of the ten different attributes.

### Tasting notes

The tasting notes taken throughout the trial also showed that the samples of wine treated with the preferred embodiment apparatus proved to be the most favourable sample within each wine variety at each sample point.

*"Complex nose with red fruits and savoury highlights. More depth on palate than D (Control) and more complexity than E (Competitor). Structure slightly more integrated into overall flow of wine than E (Competitor).*

*"Sweet blackberry aromas with some spicy lift. Richness and depth on entry, good complexity, leads to grainy tannins and low astringency. The most supple and balanced of these three wines."*

*Most lifted of the three glasses with sweet dark baked fruits with a complexing savoury note. Good depth on the attack which is well sustained through plate despite chewy structural tannins. No bitterness on the finish. Overall good balance to depth and structure."*

### Remote data analysis

The data set generated by with the preferred embodiment apparatus also showed that the oxygen rates delivered by both units of the preferred embodiment apparatus stayed within the predetermined targets, delivering 13.04 and 6.66 grams per month for Units 1 (Merlot) and 3 (Pinot Noir) respectively. The data, when graphed, show a uniformed and consistent flow of oxygen. This is consistent with the feedback received from the winemakers who tracked the development of the wine as the oxygen was introduced. Also encouraging to see was the reliable performance of the active float which oscillated every 30 minutes throughout the wine vat for the entire trial.

### Independent laboratory analysis

An independent basic panel test was conducted. Analysis results show no noticeable variances between the three samples of each variety from a chemical analysis perspective. This demonstrates that the preferred embodiment apparatus is effectively improving the wine without having any chemical impact on the wine.

| Basic Wine Panel Pre vs Post Trial | | | | | | |
|---|---|---|---|---|---|---|
| | | | Pinot Noir | | Merlot | |
| | Control | Mox | WG | Control | Mox | WG |
| Actual Alcoholic Strength (% v/v) | | | | | | |
| Pre Trial | 13.3 | 13.3 | 13.3 | 13.9 | 13.9 | 13.9 |
| Post Trial | 13.4 | 13.4 | 13.4 | 1390% | 13.9 | 13.9 |

| Total Acidity (g/L as Tartaric Acid) | | | | | | |
|---|---|---|---|---|---|---|
| Pre Trial | 5.4 | 5.4 | 5.4 | 5.7 | 5.7 | 5.8 |
| Post Trial | 5.4 | 5.4 | 5.4 | 5.7 | 5.7 | 5.7 |

| Volatile Acidity (g/L as Acetic Acid) | | | | | | |
|---|---|---|---|---|---|---|
| Pre Trial | 0.57 | 0.58 | 0.57 | 0.46 | 0.45 | 0.46 |
| Post Trial | 0.56 | 0.56 | 0.57 | 0.48 | 0.48 | 0.49 |

| LMalic Acid^{∗}(g/L) | | | | | | |
|---|---|---|---|---|---|---|
| Pre Trial | 0.04 | 0.04 | 0.03 | 0.03 | 0.03 | 0.02 |
| Post Trial | 0.03 | 0.03 | 0.03 | 0.03 | 0.03 | 0.03 |

| Total Sugars(g/L) | | | | | | |
|---|---|---|---|---|---|---|
| Pre Trial | 0.46 | 0.46 | 0.46 | 0.24 | 0.24 | 0.24 |
| Post Trial | 0.53 | 0.53 | 0.53 | 0.26 | 0.27 | 0.27 |

| pH (pH Units) | | | | | | |
|---|---|---|---|---|---|---|
| Pre Trial | 3.72 | 3.72 | 3.73 | 3.66 | 3.66 | 3.67 |
| Post trial | 3.74 | 3.75 | 3.75 | 3.69 | 3.69 | 3.69 |

| Total Sulphur Dioxide (mg/L) | | | | | | |
|---|---|---|---|---|---|---|
| Pre Trial | 29 | 30 | 29 | 35 | 36 | 36 |
| Post Trial | 24 | 25 | 24 | 24 | 21 | 21 |

| Free Sulphur Dioxide (mg/L) | | | | | | |
|---|---|---|---|---|---|---|
| Pre Trial | 19 | 19 | 18 | 16 | 19 | 18 |
| Post Trial | 15 | 15 | 13 | 7 | 8 | 8 |

## Claims

1. An apparatus (1) for releasing a gas into a liquid housed in a container (100), the apparatus (1) comprising:
a. a gas assembly including a source of compressed gas;
b. a float (5, 105, 205) in fluid communication with the source of compressed gas; and
c. a gas release membrane (7) in fluid communication with the source of compressed gas and the float (5, 105, 205), the gas release membrane (7) being adapted to release gas into the liquid, the gas release membrane (7) extending or partially extending between the gas assembly and the float (5, 105, 205);
wherein the float (5, 105, 205) has variable buoyancy that causes the float (5, 105, 205) and the gas release membrane (7) to ascend and descend depending on the buoyancy of the float (5, 105, 205), the buoyancy of the float (5, 105, 205) being reduced as the gas is released into the liquid.

2. The apparatus of claim 1, wherein the source of compressed gas is adapted to be provided outside the container (100), and the float (5, 105, 205) and at least part of the gas release membrane (7) are adapted to be housed within the container (100).

3. The apparatus of claim 1 or claim 2, wherein the gas release membrane (7) comprises a flexible tube.

4. The apparatus of any one of the preceding claims, wherein the float (105) is shaped to create a hydrodynamic effect that causes the float (105) to move generally laterally as it ascends and/or descends, preferably wherein the float (105) has one or more laterally extending fins (129).

5. The apparatus of any one of the preceding claims, further comprising a valve (11) for controlling the flow of gas from the source of gas to the float (5, 105, 205) and the gas release membrane (7).

6. The apparatus of any one of the preceding claims, wherein the gas is or comprises one or more of oxygen, sulphur dioxide, carbon dioxide, and/or nitrogen, either alone or in combination, preferably wherein the gas is infused with one or more flavours or aromas.

7. The apparatus of any one of the preceding claims, wherein the gas is or comprises oxygen.

8. A method of releasing a gas into a liquid comprising:
a. providing a container (100) containing a liquid;
b. providing a source of gas, a float (5, 105, 205) in fluid communication with the source of gas, and a gas release membrane (7) in fluid communication with the source of gas and the float (5, 105, 205); the gas release membrane (7) extending or partially extending between the source of gas and the float (5, 105, 205);
c. placing the float (5, 105, 205) and the gas release membrane (7) in the liquid in the container (100);
d. delivering gas into the gas release membrane (7) and the float (5, 105, 205) thereby increasing the buoyancy of the float (5, 105, 205), releasing the gas from the source of gas through the gas release membrane (7) into the liquid thereby reducing the buoyancy of the float (5, 105, 205); and
e. allowing the float (5, 105, 205) to ascend and descend within the liquid in the container (100) depending on the relative buoyancy of the float (5, 105, 205).

9. The method of claim 8, further comprising controlling the flow of gas from the source of gas to the float (5, 105, 205) and the gas release membrane (7) such that when the pressure within the float (5, 105, 205) reaches an upper threshold, the flow of gas from the source of gas is reduced or prevented and when the pressure within the float drops to a lower threshold, the gas is allowed to flow from the source of gas to the float (5, 105, 205) and the gas release membrane (7).

10. The method of claim 8 or 9, wherein the flow of gas from the source of gas to the float (5, 105, 205) and the gas release membrane (7) is controlled periodically in a cycle in which gas is released for a first period of time and is not released for a second period of time, preferably wherein the cycle is between about 20 minutes and about 24 hours.

11. The method of any one of claims 8 to 10, wherein the float (105) moves laterally within the liquid in the container (100) as it ascends and descends.

12. The method of any one of claims 8 to 11, wherein the gas is or comprises one or more of oxygen, sulphur dioxide, carbon dioxide, and/or nitrogen.

13. The method of any one of claims 8 to 12, wherein the gas is or comprises oxygen.

14. The method of any one of claims 8 to 13, wherein the liquid is a beverage, preferably wherein the beverage is wine.

## Patentansprüche

1. Vorrichtung (1) zum Abgeben eines Gases in eine Flüssigkeit, die in einem Behälter (100) aufgenommen ist, wobei die Vorrichtung (1) Folgendes umfasst:
a. eine Gasanordnung mit einer Quelle von komprimiertem Gas;
b. einen Schwimmer (5, 105, 205), der mit der Quelle von komprimiertem Gas in Fluidverbindung ist; und
c. eine Gasabgabemembran (7), die mit der Quelle von komprimiertem Gas und dem Schwimmer (5, 105, 205) in Fluidverbindung ist, wobei die Gasabgabemembran (7) zum Abgeben von Gas in die Flüssigkeit ausgeführt ist, wobei die Gasabgabemembran (7) sich zwischen der Gasanordnung und dem Schwimmer (5, 105, 205) erstreckt oder teilweise erstreckt;
wobei der Schwimmer (5, 105, 205) eine veränderliche Auftriebskraft aufweist, die veranlasst, dass der Schwimmer (5, 105, 205) und die Gasabgabemembran (7) in Abhängigkeit von der Auftriebskraft des Schwimmers (5, 105, 205) steigen oder sinken, wobei die Auftriebskraft des Schwimmers (5, 105, 205) beim Abgeben des Gases in die Flüssigkeit verringert wird.

2. Vorrichtung nach Anspruch 1, wobei die Quelle von komprimiertem Gas ausgeführt ist, um außerhalb des Behälters (100) bereitgestellt zu werden, und der Schwimmer (5, 105, 205) und wenigstens ein Teil der Gasabgabemembran (7) ausgeführt sind, um in dem Behälter (100) aufgenommen zu werden.

3. Vorrichtung nach Anspruch 1 oder Anspruch 2, wobei die Gasabgabemembran (7) eine biegsame Röhre umfasst.

4. Vorrichtung nach einem der vorhergehenden Ansprüche, wobei der Schwimmer (105) gestaltet ist, um einen hydrodynamischen Effekt entstehen zu lassen, der veranlasst, dass der Schwimmer (105) sich beim Steigen und/oder Sinken allgemein seitlich bewegt, vorzugsweise wobei der Schwimmer (104) ein oder mehr sich seitlich erstreckende Rippen (129) aufweist.

5. Vorrichtung nach einem der vorhergehenden Ansprüche, die ferner ein Ventil (11) zum Regeln des Gasflusses von der Gasquelle zum Schwimmer (5, 105, 205) und zur Gasabgabemembran (7) umfasst.

6. Vorrichtung nach einem der vorhergehenden Ansprüche, wobei das Gas ein oder mehr von Sauerstoff, Schwefeldioxid, Kohlendioxid und/oder Stickstoff, entweder allein oder in Kombination, ist oder umfasst, vorzugsweise wobei das Gas mit ein oder mehr Geschmacksstoffen oder Aromen versetzt ist.

7. Vorrichtung nach einem der vorhergehenden Ansprüche, wobei das Gas Sauerstoff ist oder umfasst.

8. Verfahren zum Abgeben von Gas in eine Flüssigkeit, umfassend:
a. Bereitstellen eines Behälters (100), der eine Flüssigkeit enthält;
b. Bereitstellen einer Gasquelle, eines Schwimmers (5, 105, 205), der in Fluidverbindung mit der Gasquelle ist, und einer Gasabgabemembran (7), die mit der Gasquelle und dem Schwimmer (5, 105, 205) in Fluidverbindung ist;
wobei die Gasabgabemembran (7) sich zwischen der Gasquelle und dem Schwimmer (5, 105, 205) erstreckt oder teilweise erstreckt;
d. Liefern von Gas in die Gasabgabemembran (7) und den Schwimmer (5, 105, 205), wodurch die Auftriebskraft des Schwimmers (5, 105, 205) erhöht wird, so dass Gas aus der Gasquelle durch die Gasabgabemembran (7) in die Flüssigkeit abgegeben wird, wodurch die Auftriebskraft des Schwimmers (5, 105, 205) verringert wird; und
e. Steigen- und Sinkenlassen des Schwimmers (5, 105, 205) in der Flüssigkeit in dem Behälter (100) in Abhängigkeit von der relativen Auftriebskraft des Schwimmers (5, 105, 205).

9. Verfahren nach Anspruch 8, das ferner das Regeln des Gasflusses von der Gasquelle zum Schwimmer (5, 105, 205) und zur Gasabgabemembran (7) umfasst, so dass, wenn der Druck innerhalb des Schwimmers (5, 105, 205) einen oberen Schwellenwert erreicht, der Gasfluss von der Gasquelle verringert oder verhindert wird und, wenn der Druck innerhalb des Schwimmers auf einen unteren Schwellenwert abfällt, das Gas aus der Gasquelle zum Schwimmer (5, 105, 205) und der Gasabgabemembran (7) strömen darf.

10. Verfahren nach Anspruch 8 oder 9, wobei der Gasfluss von der Gasquelle zum Schwimmer (5, 105, 205) und der Gasabgabemembran (7) periodisch in einem Ablauf geregelt wird, in dem Gas für eine erste Zeitperiode abgegeben wird und für eine zweite Zeitperiode nicht abgegeben wird, vorzugsweise wobei der Ablauf zwischen etwa 20 Minuten und etwa 24 Stunden ist.

11. Verfahren nach einem der Ansprüche 8 bis 10, wobei der Schwimmer (105) sich beim Steigen und Sinken seitlich in der Flüssigkeit in dem Behälter (100) bewegt.

12. Verfahren nach einem der Ansprüche 8 bis 11, wobei das Gas ein oder mehr von Sauerstoff, Schwefeldioxid, Kohlendioxid und/oder Stickstoff ist oder umfasst.

13. Verfahren nach einem der Ansprüche 8 bis 12, wobei das Gas Sauerstoff ist oder umfasst.

14. Verfahren nach einem der Ansprüche 8 bis 13, wobei die Flüssigkeit ein Getränk ist, vorzugsweise wobei das Getränk Wein ist.

## Revendications

1. Appareil (1) pour relâcher un gaz dans un liquide logé dans un récipient (100), l'appareil (1) comprenant :
a. un ensemble de gaz comprenant une source de gaz comprimé ;
b. un flotteur (5, 105, 205) en communication fluidique avec la source de gaz comprimé ; et
c. une membrane de relâchement de gaz (7) en communication fluidique avec la source de gaz comprimé et le flotteur (5, 105, 205), la membrane de relâchement de gaz (7) étant adaptée pour relâcher du gaz dans le liquide, la membrane de relâchement de gaz (7) s'étendant ou s'étendant partiellement entre l'ensemble de gaz et le flotteur (5, 105, 205);
dans lequel le flotteur (5, 105, 205) a une flottabilité variable qui fait que le flotteur (5, 105, 205) et la membrane de relâchement de gaz (7) montent et descendent en fonction de la flottabilité du flotteur (5, 105, 205), la flottabilité du flotteur (5, 105, 205) étant réduite au fur et à mesure que le gaz est relâché dans le liquide.

2. Appareil selon la revendication 1, dans lequel la source de gaz comprimé est adaptée pour être fournie à l'extérieur du récipient (100), et le flotteur (5, 105, 205) et au moins une partie de la membrane de relâchement de gaz (7) sont adaptés pour être logés dans le récipient (100).

3. Appareil selon la revendication 1 ou 2, dans lequel la membrane de relâchement de gaz (7) comprend un tube flexible.

4. Appareil selon l'une quelconque des revendications précédentes, dans lequel le flotteur (105) est façonné pour créer un effet hydrodynamique qui fait que le flotteur (105) se déplace généralement latéralement au fur et à mesure qu'il monte et/ou descend, de préférence dans lequel le flotteur (105) a une ou plusieurs ailettes (129) s'étendant latéralement.

5. Appareil selon l'une quelconque des revendications précédentes, comprenant en outre une valve (11) pour contrôler l'écoulement de gaz de la source de gaz au flotteur (5, 105, 205) et à la membrane de relâchement de gaz (7).

6. Appareil selon l'une quelconque des revendications précédentes, dans lequel le gaz est ou comprend un ou plusieurs d'entre oxygène, dioxyde de soufre, dioxyde de carbone et/ou azote, soit seul ou en combinaison, de préférence dans lequel le gaz est infusé d'un ou de plusieurs parfums ou arômes.

7. Appareil selon l'une quelconque des revendications précédentes, dans lequel le gaz est ou comprend de l'oxygène.

8. Procédé de relâchement d'un gaz dans un liquide, comprenant :
a. fournir un récipient (100) contenant un liquide ;
b. fournir une source de gaz, un flotteur (5, 105, 205) en communication fluidique avec la source de gaz, et une membrane de relâchement de gaz (7) en communication fluidique avec la source de gaz et le flotteur (5, 105, 205) ; la membrane de relâchement de gaz (7) s'étendant ou s'étendant partiellement entre la source de gaz et le flotteur (5, 105, 205) ;
c. placer le flotteur (5, 105, 205) et la membrane de relâchement de gaz (7) dans le liquide dans le récipient (100) ;
d. décharger du gaz dans la membrane de relâchement de gaz (7) et le flotteur (5, 105, 205) augmentant ainsi la flottabilité du flotteur (5, 105, 205), relâchant le gaz de la source de gaz à travers la membrane de relâchement de gaz (7) dans le liquide réduisant ainsi la flottabilité du flotteur (5, 105, 205) ; et
e. permettant au flotteur (5, 105, 205) de monter et de descendre dans le liquide dans le récipient (100) en fonction de la flottabilité relative du flotteur (5, 105, 205).

9. Procédé selon la revendication 8, comprenant en outre contrôler l'écoulement de gaz de la source de gaz au flotteur (5, 105, 205) et à la membrane de relâchement de gaz (7) de telle sorte que lorsque la pression dans le flotteur (5, 105, 205) atteint un seuil supérieur, l'écoulement de gaz de la source de gaz est réduit ou empêché et lorsque la pression dans le flotteur tombe à un seuil inférieur, il est permis au gaz de couler de la source de gaz au flotteur (5, 105, 205) et à la membrane de relâchement de gaz (7).

10. Procédé selon la revendication 8 ou 9, dans lequel l'écoulement de gaz de la source de gaz au flotteur (5, 105, 205) et à la membrane de relâchement de gaz (7) est contrôlé périodiquement dans un cycle dans lequel du gaz est relâché pendant une première période de temps et n'est pas relâché pendant une deuxième période de temps, de préférence dans lequel le cycle est d'entre environ 20 minutes et environ 24 heures.

11. Procédé selon l'une quelconque des revendications 8 à 10, dans lequel le flotteur (105) se déplace latéralement dans le liquide dans le récipient (100) au fur et à mesure qu'il monte et qu'il descend..

12. Procédé selon l'une quelconque des revendications 8 à 11, dans lequel le gaz est ou comprend un ou plusieurs d'entre oxygène, dioxyde de soufre, dioxyde de carbone et/ou azote.

13. Procédé selon l'une quelconque des revendications 8 à 12, dans lequel le gaz est ou comprend de l'oxygène.

14. Procédé selon l'une quelconque des revendications 8 à 13, dans lequel le liquide est une boisson, de préférence dans lequel la boisson est du vin.
